# EUROPEAN PATENT SPECIFICATION

(11) **EP 2 298 591 B1**
(45) Date of publication and mention of the grant of the patent: **14.03.2012**
(21) Application number: 10175771.4
(22) Date of filing: 08.09.2010
(51) Int. Cl.: B60N 2/015, B60N 2/50, B60N 2/54

(54) **A fixing system for a sulky in small work machines**
Befestigungsvorrichtung für einen Fahrzeugsitz für kleine Arbeitsmaschinen
Moyen de fixation pour siège de petites machines de travail

(30) Priority: 22.09.2009 IT RE20090091
(43) Date of publication of application: 23.03.2011
(73) Proprietor: Emak S.p.A., 42011 Bagnolo in Piano (Reggio Emilia) (IT)
(72) Inventor: Bigi, Salvatore, 42011, BAGNOLO IN PIANO (REGGIO EMILIA) (IT)
(74) Representative: Corradini, Corrado

(56) References cited:
- EP-A- 0 518 158
- GB-A- 190 919 836
- US-A- 2 533 573
- US-A- 2 676 032
- US-A- 2 880 034
- US-A- 5 876 085
- US-A- 6 135 412
- US-A1- 2009 184 448

## Description

The invention relates to small self-propelling work machines equipped with a sulky for the operator.

These small machines, for example lawnmowers, walking tractors and the like, exhibit a frame which supports a motor and respective, generally hydraulic, transmission devices.

The frame is equipped with drive wheels and guiding equipment.

Work tools are applied to the frame, and they are generally positioned on the frame using appropriate hinge supports.

A sulky is also fitted onto the frame in a position such that the pedals and the operating levers are within the operator's reach.

The sulky comprises a seat connected to an unsuspended base which is destined to be fitted to the frame of the machine by elastic springing means. Examples of such a sulky can be found in US 2009/0184448, US 2533573 or US 6135412.

A further example of a sulky for small work machines is known from US-A-2 880 034 (corresponding to the preamble of independent claim 1).

Generally, the unsuspended part of the sulky is rigidly constrained to the frame of the machine by means of bolts, the frame and the unsuspended part of the sulky being appropriately perforated for the purpose in pre-established positions.

The perforation requires the use of appropriate templates.

The prior art comprises a number of drawbacks, including the complicated structure of the sulky, suspended using spring mechanisms, and the complicated system for fitting it to the frame, besides the time that it takes to fit and remove the sulky whenever access to the parts of the machine which are positioned under the sulky is necessary.

In the prior art these operations are very laborious and require time and equipment in order for them to be carried out correctly.

Further drawbacks in the prior art are that the machine underneath the sulky is generally covered by a shield which must also be removed in order for access to the parts of the machine underneath the sulky to be gained.

Also the applying and removing of the shield are long and laborious operations and require previous removal of the sulky.

The problem is to realize a sulky that has a simplified shape, and that can be quickly fitted to and removed from the frame of the machine while guaranteeing at the same time a stable and secure fastening to the frame, which might also be integrated with the shield in such a way as to be removable and fittable back together with the shield.

The aim of the invention is to make available a frame-sulky unit which offers a simple, reliable and economical solution to this problem.

A further aim of the invention is to make available a frame-sulky unit to which a shield can be stably associated.

The aims are attained by the invention with the assembly described in the independent claim.

The dependent claims recite particular and/or alternative solutions aimed at improving the results of the invention.

In particular, the sulky of the invention comprises a seat removably fitted to the frame of the machine, by means of devices which are vertically elastically deformable under the weight bearing down on the seat.

The elastically-deformable devices are made of a fashioned and elastically-flexible chassis, the function of which is to fasten the seat directly to the frame of the machine.

The chassis has a horizontal portion, which is parallel to the above longitudinal members of the machine, and a bent portion which is inclined such as to connect to the longitudinal members, the flat end of the chassis being connected to the frame of the machine above the longitudinal members.

The chassis is preferably U-shaped and exhibits a flat part near the base of the U, while the ends of each wing constitute the bent part and are connected to the respective longitudinal member by interposing a sliding cursor on the longitudinal member in relation to which the wings can perform small rotations.

In particular, the cursor shows an opening facing upwards into which the lower end of the chassis can be freely inserted.

The opening can be inclined either towards the front or the back of the frame of the machine.

Finally, the chassis can constitute a support for a shield, which is stably connected to it.

The advantages and constructional and functional characteristics of the invention will emerge from the detailed description that follows, illustrated in the figures of the accompanying tables of drawings and relating to a preferred embodiment of the invention, given by way of non-limiting example.
Figure 1 illustrates the invention in a perspective view;

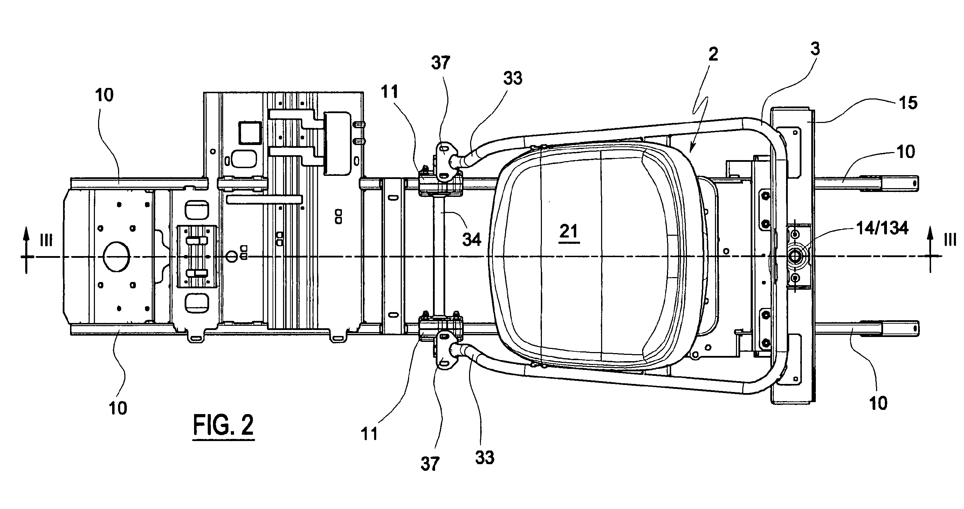

figure 2 shows the invention in plan view;
figure 3 shows section lll-lll of figure 2;
figure 3A is an enlarged detail of figure 3.

The figures illustrate the frame 1 of a small self-propelling machine, onto which a sulky 2 has been fitted.

In the invention the sulky 2 comprises a seat 21 which is rigidly fitted onto a chassis 3.

The chassis 3 is constituted by a U-shaped tube exhibiting wings 33 which are in turn bent downwards.

In particular the chassis 3 comprises two parallel crossbars 31 and 32, one of which crossbars 31 is front-mounted to the seat 21, while the other crossbar 32 functions as a support for the rear part of the seat.

Then ends of the wings 33 are joined by a tubular crossbar 34 which is fitted to them by means of welding or by other convenient means.

A cursor 11 is inserted on each longitudinal member 10 of the frame 1, which cursor 11 friction-slides and is provided with an opening 12 inclined upwards with respect to the longitudinal member.

The mouthpiece of the opening 12 narrows slightly.

The openings 12 are suitable for snap-fitting the tubular crossbar 34.

A bush 35 made of slightly-deformable synthetic material is positioned between the ends of the crossbar 34 and the respective opening 12.

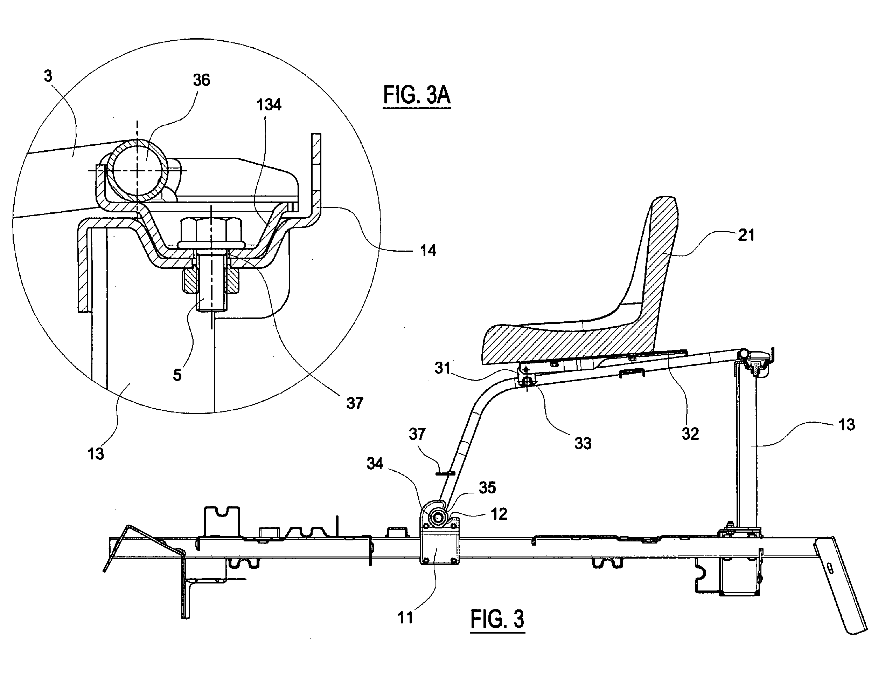

A body 134 made of fashioned sheet-metal having a downwardly-tapered truncoconical shape and exhibiting a central hole 37 is fixed, preferably by means of welding, to the centre of the base 36 of the chassis 3 (figure 3A).

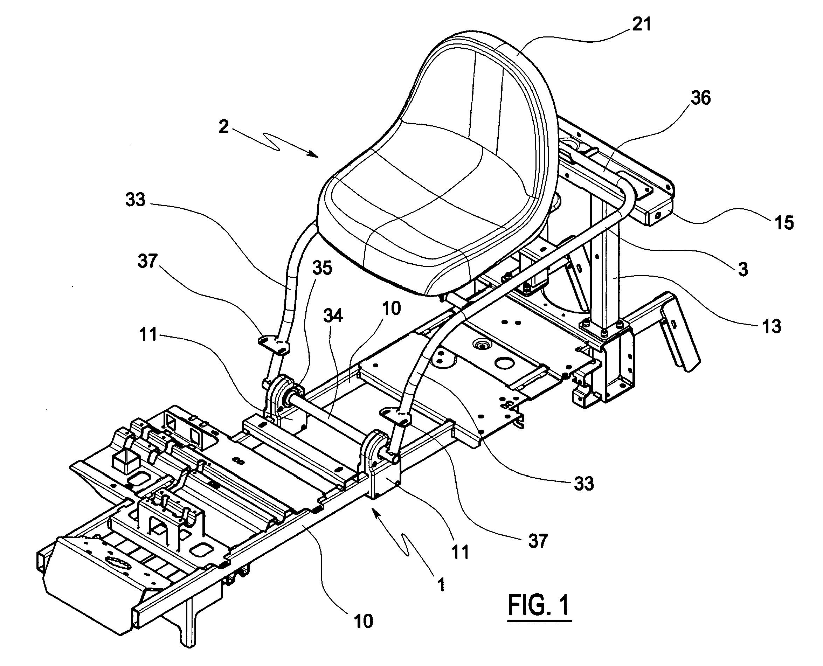

The frame 1 comprises a rectangular vertical portion 13 (figure 1), which is provided with a crossbar 15 functioning as a support for the base 36 of the chassis 3.

A body 14 (figure 3A) having a complementary shape to the body 134 such as snugly to receive the body 134 is fixed centred to the crossbar 15 by known means.

The body 14 also exhibits a central hole aligned to the hole in the body 134 and a bolt 5 blocks the two bodies 14, 134 together.

The sulky is fitted simply by snap-fitting the ends of the crossbar 34 into the openings 12 of the cursors 11, and then by blocking the two bodies 14 and 134, one inside the other.

Removal is done by performing the same operations in reverse order and it is often unnecessary to pull out the crossbars 34 from the openings 12.

The chassis 3 further comprises brackets 37, and others not shown, to which a shield, also not illustrated, can be stably fitted, in the shape of a cap which completely covers the chassis and extends to cover the rear part of the frame of the machine.

In this way, by removing or lifting the chassis 3 the shield is contextually also removed or lifted.

Thanks to its shape and to the methods for fitting it onto the frame 1 of the machine, the frame 3 is subjected to vertical elastic movements, due to the elastic deformations of the frame made possible by the moving of the cursors 11 on the longitudinal members 10 of the frame of the machine.

With this aim, the chassis 3 must be made of suitable material, for example steel, and sized in a way such that it can elastically deform under the weight of the operator sitting on the seat 21.

## Claims

1. A sulky (2) for small work machines comprising a seat (21) and means for removably fixing the seat (21) to a frame (1) of the machine, wherein the means for removably fixing the seat (21) are vertically elastically deformable under a weight bearing down on the seat and comprise a U-shaped chassis (3) having wings (33) bent forward and downwards, whose ends are connected to at least one longitudinal member (10) of the frame (1), **characterised in that** said ends of the wings (33) are connected to two longitudinal members (10) of the frame (1), respectively, by means of cursors (11) which are arranged so as to friction-slide on the longitudinal members (10) in consequence of elastic deformation of the U-shaped chassis (3).

2. The sulky of claim 1, **characterised in that** the U-shaped chassis (3), has a base (36) which is rigidly constrained to the frame (1) of the machine in a position that is vertically distant from the longitudinal members (10).

3. The sulky of claim 1, **characterised in that** in the connection of the ends of each wing (33) to respective longitudinal members (10) an end of the respective wing (33) can perform small rotations.

4. The sulky of claim 3, **characterised in that** the ends of the two wings (33) are connected by a crossbar (34), ends of which are engaged in the respective cursor (11).

5. The sulky of claim 4, **characterised in that** each cursor comprises an opening (12) inclined upwards and destined to receive the crossbar (34) in a snap-fit.

6. The sulky of claim 5, **characterised in that** the opening (12) is inclined towards a rear of the frame (1) of the machine.

7. The sulky of claim 5, **characterised in that** the opening (12) is inclined towards a front of the frame of the machine.

8. The sulky of claim 1, **characterised in that** centring means are located at a centre of the base of the chassis (3), which centring means are destined to couple with centring means constrained to the machine frame (1) above the longitudinal members (10), the centring means constrained to the machine frame comprising reciprocal fastening means.

9. The sulky of claim 1 **characterised in that** crossbars (31,32) for supporting the seat (2) are positioned between the wings (33) of the chassis (3), in a portion of the chassis (3) which is parallel to the longitudinal members (10) of the machine.

10. The sulky of claim 1 **characterised in that** the seat (2) can rotate in relation to an axis of one of the crossbars (31,32).

11. The sulky of claim 2 **characterised in that** a shield is stably constrained to the elastically-deformable chassis (3).

## Patentansprüche

1. Anhängesitzvorrichtung (2) für kleine Arbcitsmaschinen, umfassend einen Sitz (21) und Mittel zur abnehmbaren Befestigung des Sitzes (21) am Rahmen (1) der Maschine, wobei die Mittel zur abnehmbaren Befestigung des Sitzes (21) unter einem auf den Sitz einwirkenden Gewicht vertikal elastisch verformbar sind und ein U-förmiges Traggestell (3) mit Flügeln (33) umfassen, die nach vorn und nach unten gebogen sind und deren Enden mit mindestens einem längsgerichteten Element (10) des Rahmens (1) verbunden sind **dadurch gekennzeichnet, dass** die Enden der Flügel (33) mit zwei längsguriuhtelurl Elementen (10) des Rahmens (1) jeweils mittels Cursoren (11) verbunden sind, die so angeordnet sind, dass ein Reibgleiten derselben auf den längsgerichteten Elementen infolge der elastischen Verformung des U-förmigen Traggestells (3) erfolgt.

2. Anhängesitzvorrichtung nach Anspruch 1, **dadurch gekennzeichnet, dass** das U-förmige Traggestell (3) eine Basis (36) besitzt, die mit dem Rahmen (1) der Maschine in einer Stellung starr verbunden ist, die von den längsgerichteten Elementen (10) vertikal beabstandet ist.

3. Anhängesitzvorrichtung nach Anspruch 1, **dadurch gekennzeichnet, dass** in der Verbindung der Enden eines jeden Flügels (33) mit dem jeweiligen längsgerichteten Element (10) ein Ende des jeweiligen Flügels (33) kleine Drehungen ausführen kann.

4. Anhängesitzvomchtung nach Anspruch 3, **dadurch gekennzeichnet, dass** die Enden der beiden Flügel (33) mit einem Querbalken (34) verbunden sind, dessen Enden in den jeweiligen Cursor (11) eingreifen.

5. Anhängesitzvorrichtung nach Anspruch 4, **dadurch gekennzeichnet, dass** jeder Cursor eine Öffnung (12) umfasst, die nach oben geneigt und dazu bestimmt ist, den Querbalken (34) einrastend aufzunehmen.

6. Anhängesitzvorrichtung nach Anspruch 5, **dadurch gekennzeichnet, dass** die Öffnung (12) zu einer Rückseite des Rahmens (1) der Maschine geneigt ist.

7. Anhängcsitzvorrichtung nach Anspruch 5, **dadurch gekennzeichnet, dass** die Öffnung (12) zu einer Vorderseite des Rahmens der Maschine geneigt ist.

8. Anhängesitzvorrichtung nach Anspruch 1, **dadurch gekennzeichnet, dass** Zentriermittel in einem Zentrum der Basis des Traggestells (3) angeordnet sind, wobei die Zentriermittel dazu bestimmt sind, mit den Zentriermitteln gekuppelt zu werden, die mit dem Maschinenrahmen (1) oberhalb der längsgerichteten Elemente (10) verbunden sind, wobei die mit dem Maschinenrahmen verbundenen Zentriermittel gegenseitige Befestigungsmittel umfassen.

9. Anbängesitzvorrichtung nach Anspruch 1, **dadurch gekennzeichnet, dass** Querbalken (31, 32) zur Auflage des Sitzes (2) zwischen den Flügeln (33) des Traggestells (3) in einem Teil des Traggestells (3) positioniert sind, das sich parallel zu den längsgerichteten Elementen (10) der Maschine befindet.

10. Anhängesitzvorrichtung nach Anspruch 1, **dadurch gekennzeichnet, dass** der Sitz (2) sich bezüglich einer Achse eines der Querbalken (31, 32) drehen kann.

11. Arlbängesitzvortichtung nach Anspruch 2, **dadurch gekennzeichnet, dass** ein Schild fest mit dem elastisch verformbaren Traggestell (3) verbunden ist.

## Revendications

1. Siège (2) pour petites machines de travail comprenant un siège (21) et des moyens pour fixer de manière amovible le siège (21) à un cadre (1) de la machine, où les moyens pour fixer de manière amovible le siège (21) sont verticalement déformables élastiquement sous un poids appuyant sur le siège et comprennent un châssis en forme de U (3) ayant des ailes (33) pliées vers l'avant et vers le bas, dont les extrémités sont connectées à au moins un élément longitudinal (10) du cadre (1), **caractérisé en ce que** lesdites extrémités des ailes (33) sont connectées à deux éléments longitudinaux (10) du cadre (1), respectivement, au moyen de curseurs (11) qui sont disposés de sorte à coulisser par friction sur les éléments longitudinaux (10) en conséquence de la déformation élastique du châssis en forme de U (3).

2. Siège de la revendication 1, **caractérisé en ce que** le châssis en forme de U (3) a une base (36) qui est retenue de manière rigide au cadre (1) de la machine dans une position qui est verticalement distante des éléments longitudinaux (10).

3. Siège de la revendication 1, **caractérisé en ce que**, dans la connexion des extrémités de chaque aile (33) aux éléments longitudinaux respectifs (10), une extrémité de l'aile respective (33) peut effectuer de petites rotations.

4. Siège de la revendication 3, **caractérisé en ce que** les extrémités des deux ailes (33) sont connectées par une barre transversale (34), dont les extrémités sont mises en prise avec le curseur respectif (11).

5. Siège de la revendication 4, **caractérisé en ce que** chaque curseur comprend une ouverture (12) inclinée vers le haut et destinée à recevoir la barre transversale (34) dans un encliquetage.

6. Siège de la revendication 5, **caractérisé en ce que** l'ouverture (12) est inclinée vers l'arrière du cadre (1) de la machine.

7. Siège de la revendication 5, **caractérisé en ce que** l'ouverture (12) est inclinée vers l'avant du cadre de la machine.

8. Siège de la revendication 1, **caractérisé en ce que** des moyens de centrage sont situés au centre de la base du châssis (3), lesquels moyens de centrage sont destinés à s'accoupler avec des moyens de centrage retenus au cadre de la machine (1) au-dessus des éléments longitudinaux (10), les moyens de centrage retenus au cadre de la machine comprenant des moyens de fixation réciproques.

9. Siège de la revendication 1 **caractérisé en ce que** des barres transversales (31, 32) pour supporter le siège (2) sont positionnées entre les ailes (33) du châssis (3), dans une partie du châssis (3) qui est parallèle aux éléments longitudinaux (10) de la machine.

10. Siège de la revendication 1 **caractérisé en ce que** le siège (2) peut tourner par rapport à un axe de l'une des barres transversales (31, 32).

11. Siège de la revendication 2 **caractérisé en ce qu'**un bouclier est retenu de manière stable au châssis déformable élastiquement (3).
